Europäisches Patentamt

(19) European Patent Office

Office européen des brevets

(11) Numéro de publication: **0 191 530**
**B1**

(12) **FASCICULE DE BREVET EUROPEEN**

(45) Date de publication du fascicule du brevet: **12.09.90**

(21) Numéro de dépôt: **86200177.3**

(22) Date de dépôt: **10.02.86**

(51) Int. Cl.⁵: **G 01 N 23/205**

(54) **Chambre de Laüe.**

(30) Priorité: **12.02.85 FR 8501933**

(43) Date de publication de la demande:
**20.08.86 Bulletin 86/34**

(45) Mention de la délivrance du brevet:
**12.09.90 Bulletin 90/37**

(84) Etats contractants désignés:
**CH DE FR GB LI NL**

(56) Documents cités:
**DE-B-1 070 844**
**DE-C- 684 282**
**DE-C- 758 513**

**JOURNAL OF THE SOCIETY OF MOTION PICTURE AND TELEVISION ENGINEERS, vol. 80, no. 1, janvier 1971, pages 18-22; K. REIFSNIDER: "Recent developments in the use of high-gain optical image intensifiers for high-speed photography of dynamic x-ray diffraction patterns"**

(73) Titulaire: **LABORATOIRES D'ELECTRONIQUE PHILIPS**
**3, Avenue Descartes**
**F-94450 Limeil-Brévannes (FR)**
㊶ **FR**

(73) Titulaire: **N.V. Philips' Gloeilampenfabrieken**
**Groenewoudseweg 1**
**NL-5621 BA Eindhoven (NL)**
㊶ **CH DE**

(72) Inventeur: **Schiller, Claude**
**Société Civile S.P.I.D. 209 rue de l'Université**
**F-75007 Paris (FR)**

(74) Mandataire: **Landousy, Christian et al**
**Société Civile S.P.I.D. 156, Boulevard Haussmann**
**F-75008 Paris (FR)**

(56) Documents cités:

**NUCLEAR INSTRUMENTS & METHODS, vol. 143, no. 2, juin 1977, pages 319-325, North Holland Publishing Co.; L. JACOBS et al.: "An X-ray topographic study of large crystals for a bent-crystal gamma diffractometer"**

## Description

L'invention concerne une chambre pour réaliser un diagramme de diffraction dit de Laüe, incluant une source de rayons X concrétisée par son foyer et définie par ses dimensions focales et son angle de prélèvement, utilisée sous un angle de prélèvement tel que ses dimensions focales apparentes sont de même grandeur ≤ 0,5 mm, un collimateur concrétisé par deux diaphragmes et placé sur le trajet des rayons issus de la source, et des moyens d'enregistrement du diagramme de Laüe obtenu à partir d'un échantillon monocristallin illuminé par le système optique ainsi constitué.

L'invention trouve son application dans la mesure de l'orientation de monocristaux de nouveaux matériaux et en particulier de semiconducteurs pour former des cristaux servant de germe de tirage ou pour former des substrats destinés à recevoir des couches épitaxiales par exemple, orientation pour laquelle une précision extrême est en effet requise.

Il est connu de la publication intitulée "Recent Developments in the Use of High-Gain Optical Image Intensifiers for High-Speed Photography of Dynamic X-Ray Diffraction Patterns dans Journal of the Society of Motion Picture and Television Engineers, vol. 80, n° 1, Janv. 1971, pp. 18-22" d'utiliser une source de rayons X de 0,4 × 4 mm sous un angle de prélèvement de 3° de telle sorte que ses dimensions focales apparentes soient de 0,4 × 0,4 mm. Un collimateur concrétisé par deux diaphragmes est disposé entre la source et l'échantillon. La source est fortement diaphragmée par le collimateur. Pour l'homme du métier, cela signifie que le diamètre des diaphragmes est petit devant les dimensions apparentes de la source. Les moyens d'enregistrement incluent un tube intensificateur d'image et sont disposés sur le trajet des rayons diffractés, l'échantillon se trouvant entre le collimateur et les moyens d'enregistrement.

La publication citée indique que la question de la résolution, au moyen d'un tel dispositif, est encore sans réponse. Un autre dispositif est décrit préconisant l'illumination directe de l'échantillon par la source linéaire de rayons X, sans utilisation de collimateur, pour l'enregistrement de diagrammes de Laüe en dynamique, lorsque l'échantillon est soumis à des tensions.

Un support de film négatif pour diagramme de Laüe est par ailleurs connu par les brevets US 2 495 111, 2 543 160, 2 933 993, 2 483 389, 2 854 908 et les autres, déposés par la société POLAROID entre 1949 et 1954. Ce dispositif comprend outre le support de film proprement dit, un collimateur formé d'un tube muni d'un diaphragme à chaque extrémité, fixé sur le support perpendiculairement au film et à faible distance d'une des faces de ce dernier, et un écran dit de transformation fixé sur le support parallèlement au film et à faible distance de l'autre face de ce dernier. Cet écran de transformation transforme les photons X en photons visibles pour une meilleure utilisation des films négatifs POLAROID qui ne sont pas très sensibles aux rayons X.

Pour obtenir un diagramme de Laüe à l'aide de ce dispositif, un faisceau issu d'une source de rayons X est dirigé vers le collimateur, traverse le collimateur, le film négatif, puis l'écran de transformation par une ouverture circulaire pratiquée dans ce dernier, avant de frapper le cristal à étudier. Le faisceau de rayons X forme ainsi sur le film une tache qui constitue la trace du faisceau direct et qui matérialise l'axe optique du dispositif. Les rayons qui atteignent le cristal sont diffractés par des plans cristallins superficiels et reviennent vers le support de film négatif. Les rayons diffractés frappent donc en retour l'écran de transformation qui transforme les photons X en visibles, lesquels impressionnent à leur tour le film négatif, formant le diagramme de diffraction du monocristal, diagramme dont la tache centrale est constituée par la trace du faisceau direct de rayons X.

Or les sources de rayons X disponibles sur le marché, présentent un foyer linéaire qui, si cette ligne est placée de telle sorte qu'elle fait avec l'axe optique d'un dispositif un angle dit angle de prélèvement, peut être assimilé, pour ce dispositif optique, à une source plus ou moins ponctuelle. Cette source est d'autant moins ponctuelle que l'angle de prélèvement est plus grand, c'est-à-dire que l'angle sous lequel est vue l'extrémité de la ligne-foyer est important.

Or le dispositif POLAROID décrit présente un collimateur dont les diaphragmes sont de grandes dimensions pour permettre d'utiliser les sources de rayons X du commerce sous un grand angle de prélèvement, de manière à obtenir une quantité de rayonnement suffisant à réaliser les diagrammes de diffraction.

Ce dispositif produit alors une tache dûe au faisceau transmis qui d'une part est de grandes dimensions et d'autre part est entourée d'un halo provenant des rayons qui s'appuient sur les bords des diaphragmes, ce qui fait que la localisation de l'axe optique du système est hautement imprécise.

De plus, lorsque le faisceau direct frappe l'échantillon à étudier, pour des plans cristallins réflecteurs qui font un angle donné avec la surface de l'échantillon, il y a diffraction non seulement du fond continu émis par la source correspondant à la tache de pleine lumière du faisceau direct, mais encore il y a diffraction de la lumière provenant de la zone de pénombre qui l'entoure. Ceci ajoute encore à l'imprécision des mesures rendues déjà difficiles par les dimensions de la tache centrale.

La présente invention vise à fournir une chambre de Laüe qui permet d'obtenir une grande précision sur l'orientation des monocristaux du fait qu'elle permet la réalisation de diagrammes de diffraction dont les taches sont très fines et localisées avec précision, tout en étant suffisamment lumineuses pour être enregistrées sur un film.

Mais ce but ne peut être atteint que si l'on va à l'encontre de la tendance qui consiste, pour la réalisation de diagrammes de rayons X enregistrés sur film, à rechercher toujours plus d'intensité, par des sources plus lumineuses et donc par des angles de prélèvement plus grands. Pour la précision des mesures, une tache de diffraction peu lumineuse mais fine et précisément localisée doit être recherchée de préférence à une tache très lumineuse mais de grand diamètre donc obtenue à partir d'un faisceau incident divergent qui ne permet pas une localisation précise de la tache.

Selon la présente invention ce but est atteint par une chambre de Laüe du type décrit dans le préambule, caractérisé en ce que le diamètre des ouvertures des diaphragmes est sensiblement de même grandeur que les dimensions focales apparentes de la source et inférieur au rayon moyen d'une tache de diffraction à mi-intensité, en ce que les moyens d'enregistrement incluent un plan-film disposé sur le trajet des faisceaux issus du collimateur, entre ce dernier et l'échantillon, cet échantillon étant placé à proximité de la face du film opposée à la source, et ce plan film recevant sur sa face tournée vers la source la trace directe du faisceau incident, et sur son autre face le diagramme formé des taches de diffraction caractéristiques de l'orientation des plans réticulaires de l'échantillon par rapport à l'axe optique du collimateur.

Dans une réalisation de l'invention, cette chambre est telle que la source de rayons X a pour dimensions focales $8 \times 0,4$ mm et est utilisée sous un angle de prélèvement de 3° de telle sorte que ses dimensions focales apparentes sont de $0,4 \times 0,4$ mm, et est caractérisée en ce que le diamètre de l'ouverture des diaphragmes est de l'ordre de 0,4 mm et en ce que l'échantillon monocristallin est placé à une distance du film inférieure à 100 mm.

Dans ces conditions, la tache de pleine lumière formée par la trace directe du faisceau transmis est très fine et la zone de pénombre qui l'entoure est extrêmement réduite. Par conséquent les taches de diffraction correspondant aux plans réticulaires du monocristal à étudier sont produites à partir d'un pinceau incident très fin et sont donc d'une part très fines et d'autre part localisées de façon très précise. L'orientation du cristal par rapport à l'axe optique du système est alors très bien définie.

L'invention sera mieux comprise à l'aide de la description suivante illustrée par les figures annexées dont:

la figure 1a qui représente le dispositif en coupe parallèlement à l'axe optique X' X''.

la figure 1b qui représente le trajet des rayons X dans un tel dispositif,

la figure 2 qui représente la variation de l'intensité I d'une tache de diffraction en fonction de la distance $\Delta$ au centre de la tache, la distance D entre le planfilm sur lequel est formé le diagramme et l'échantillon étant prise comme paramètre, et le graphique en trait continu correspondant à un angle de prélèvement $\alpha = 3°$, un angle de diffraction $2\phi = 0$ et un diamètre de diaphragme d = 0,4 mm, alors que le graphique en trait discontinu correspond à un angle de prélèvement $\alpha = 3°$, un angle de diffraction $2\phi = 0$ et un diamètre de diaphragme d = 0,8 mm,

la figure 3a qui représente la variation du diamètre $2 \Delta_M$ d'une tache de diffraction à mi-intensité en fonction de la distance D entre le plan-film et l'échantillon, le graphique en trait continu correspondant aux conditions $\alpha = 3°$ et d = 0,4 mm, alors que le graphique en trait discontinu correspond aux conditions $\alpha = 3°$ et d = 0,8 mm,

la figure 3b qui représente la variation du rayon $\Delta_M$ d'une tache de diffraction à mi-intensité en fonction du diamètre d des diaphragmes dans les conditions $\alpha = 3°$ et D = 30 mm.

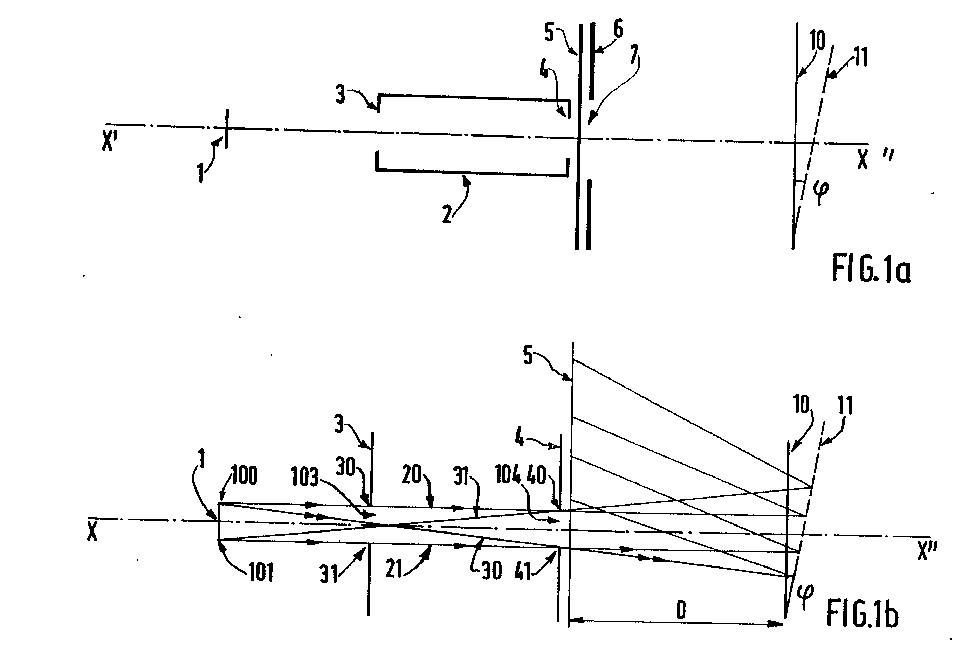

Tel que représenté en coupe sur la figure 1a, le dispositif comprend une source 1 de rayon X, un collimateur 2 formé d'un tube par exemple métallique de quelques millimètres de diamètre, muni de deux diaphragmes 3 et 4, d'ouverture d situés à chaque extrémité du tube et par exemple amovibles. Le dispositif comprend en outre un film plan 5 monté dans un support non représenté, et un écran de transformation 6.

Le support de film plan, qui peut être un support du type POLAROID Ref X R7, déjà cité ne fait pas à proprement parler partie de l'invention. Tout magasin de plan-film classique peut être utilisé, à condition qu'un tel magasin puisse dégager les deux faces du plan-film puisque les diagrammes sont établis au moins pour une partie en transmission, et à condition également de munir la face du magasin en regard de l'échantillon 10 d'un écran de transformation 6 si le planfilm utilisé est peu sensible aux rayons X.

Si le support POLAROID du type cité est utilisé, alors il doit être démuni de son collimateur qui ne convient pas pour les raisons qui ont été développées plus haut.

La source 1, le collimateur 2, le support de planfilm et l'écran de transformation 6, et un porte-échantillon pour l'échantillon 10 sont montés sur un banc d'optique de haute précision et alignés optiquement selon un axe optique X' X''.

La source de rayons X peut être avantageusement une source PHILIPS du type PW2224/20 à anticathode de tungstène, dont le foyer a pour dimensions $0,4 \times 8$ mm et un angle de prélèvement $\alpha$ compris entre 0 et 20° lorsque le prélèvement est fait par point. Ces tubes à rayons X sont habituellement utilisés sous un angle de prélèvement d'au moins 6° de manière à obtenir l'intensité la plus grande possible, les constructeurs cherchant à améliorer les performances du tube par l'éloignement de l'anode et l'agrandissement des fenêtres de manière à pouvoir précisément utiliser un angle de prélèvement de plus en plus grand.

Selon la présente invention, une telle source sera au contraire utilisée sous un angle $\alpha$ plus petit que l'angle usuel, soit approximativement

α = 3°, de manière à obtenir des dimensions apparentes pour la source de 0,4 × 0,4 mm, c'est-à-dire telles que la dimension longitudinale paraîsse identique à la dimension transversale.

De plus, le diamètre $d$ des diaphragmes du collimateur sera choisi du même ordre de grandeur soit:

$$d \simeq 0,4 \text{ mm},$$

c'est-à-dire de grandeur moitié de celle du diaphragme préconisée dans l'art antérieur.

Dans ces conditions, l'intensité lumineuse I des rayons, qui issus de la source 1 traversent le collimateur 2 et impressionnent le film 5, est quatre fois moins grande que selon l'art antérieur. Mais le diagramme de diffraction est cependant de bien meilleure qualité, parce que de plus grande précision comme il va être montré ci-après.

En effet, les rayons issus des bords 100 et 101 de la source 1 sont limités par les bords 30 et 31 de l'ouverture 103 du diaghragme 3 d'une part, et par les bords 40 et 41 de l'ouverture 104 du diaphragme 4 d'autre part.

Ces rayons traversent le film négatif 5 en formant la tache centrale du diagramme de diffraction. Cette tache est formée d'une zone de pleine lumière délimitée par les rayons 20 et 21 parallèles à l'axe optique, et d'une zone de pénombre délimitée par les rayons 30 et 31 qui s'appuient sur les bords 40 et 41 du diaphragme 4.

Il est certain que si les dimensions de la source augmentent alors les dimensions de la zone de pénombre augmentent énormément. Il est non moins certain que si l'une des dimensions seulement de la source augmente alors la zone de pénombre voit ses dimensions augmenter dans cette direction et elle devient elliptique.

C'est pourquoi il est important que la source présente des dimensions apparentes identiques dans le sens transversal et dans le sens longitudinal, ce qui est obtenu pour la source utilisée en exemple, avec un angle de prélèvement α = 3°.

Comme il est montré sur la figure la, après avoir traversé le film 5, les rayons issus de la source traversent l'écran de transformation 6 par une ouverture circulaire 7 de diamètre suspérieur au diamètre $d$ du diaphragme 4. Puis comme il est montré figure 1b, les rayons frappent l'échantillon 10 et sont réfléchis par des plans réticulaires tels que le plan 11 qui fait avec la face d'entrée de l'échantillon un angle φ.

Après réflexion sur le plan réticulaire 11, les rayons reviennent sur l'écran de transformation 6 qui transforme les photons X en visibles et impressionnent à leur tour le film 5.

En se réfléchissant sur le plan réticulaire 11, les rayons 20 et 21 parallèles à l'axe optique délimitent la zone de pleine lumière d'une tache de diffraction caractéristique de ce plan réticulaire, alors que les rayons extrêmes 30 et 31 qui s'appuient sur les bords du diaphragme 4 délimitent la zone de pénombre qui entoure la zone de pleine lumière de cette tache.

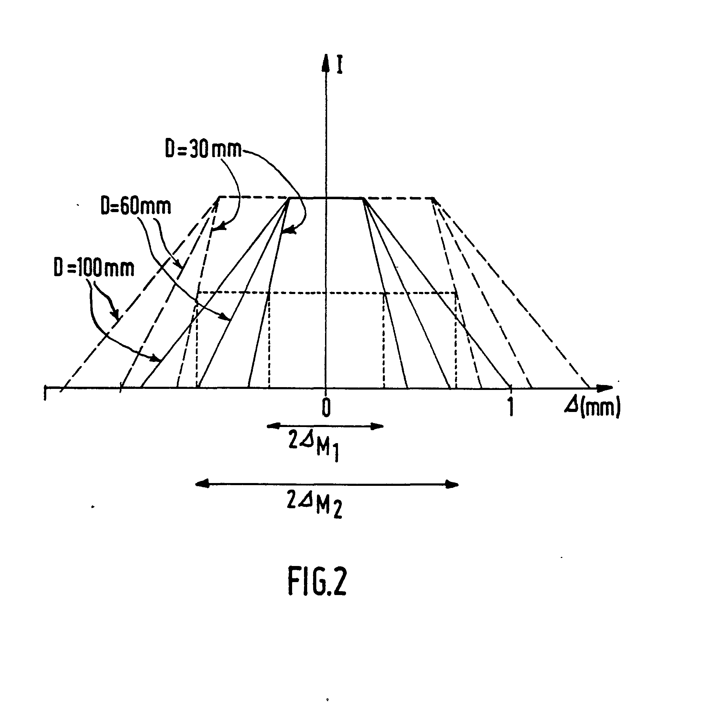

Le diamètre de la zone de pleine lumière ne dépend que des dimensions de la source et des diaphragmes, et ne dépend pas de la distance D entre le film et l'échantillon. Ceci apparaît en particulier sur la figure 2 qui donne la répartition de l'intensité lumineuse I en fonction de l'éloignement Δ au centre d'une tache de diffraction, la distance D étant prise comme paramètre.

Par contre le diamètre de la zone de pénombre dépend de cette distance D. C'est pourquoi l'homme de l'art choisira une distance D raisonnable de manière à ne pas trop augmenter ce diamètre.

Mais les diamètres aussi bien de la zone de pleine lumière que de la zone de pénombre dépendent surtout des dimensions de la source et des diaphragmes.

La figure 2 montre que pour un même angle de prélèvement de α = 3° et pour une même distance D = 30 mm par exemple, le diamètre $2\Delta_{M2}$ à mi-intensité de la tache de diffraction obtenue avec des diaphragmes de diamètre d = 0,8 mm est plus du double du diamètre $2\Delta_{M1}$ de la tache de diffraction obtenue avec des diaphragmes de diamètre d = 0,4 mm.

Or le besoin toujours plus grand en substrats semiconducteurs orientés avec une grande précision, conduit à chercher à obtenir des diagrammes de diffraction de plus en plus précis. Il ne s'agit pas en effet seulement d'identifier des taches de diffraction, mais de se servir de l'outil que constitue le diagramme, pour parvenir à orienter un monocristal de manière à pouvoir l'utiliser comme substrat de couches épitaxiales, ou de couches implantées, ou comme amorce de tirage d'un lingot monocristallin par exemple.

Pour répondre à ces conditions, le rayon $\Delta_M$ à mi-intensité des taches de diffraction, ne doit pas dépasser 0,5 mm.

Par ailleurs il faut tenir compte du fait que le diagramme de diffraction est enregistré sur un plan-film négatif, et que si l'on ne dispose pas de suffisamment d'intensité lumineuse, on est amené à allonger le temps de pose, ce qui entraîne un élargissement des taches enregistrées.

C'est pourquoi, un grand diamètre des diaphragmes et des grandes dimensions de sources étaient préconisés par l'art antérieur.

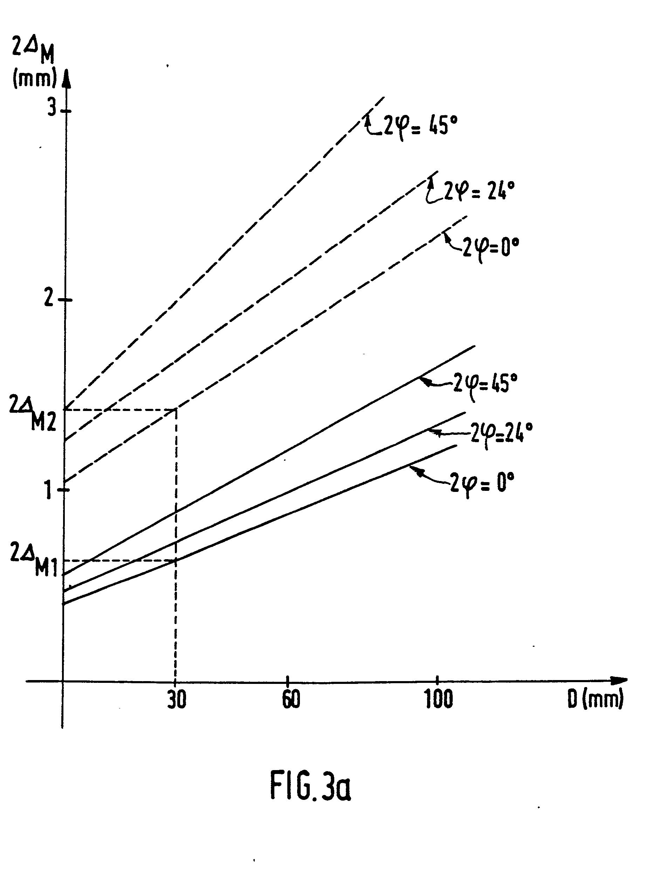

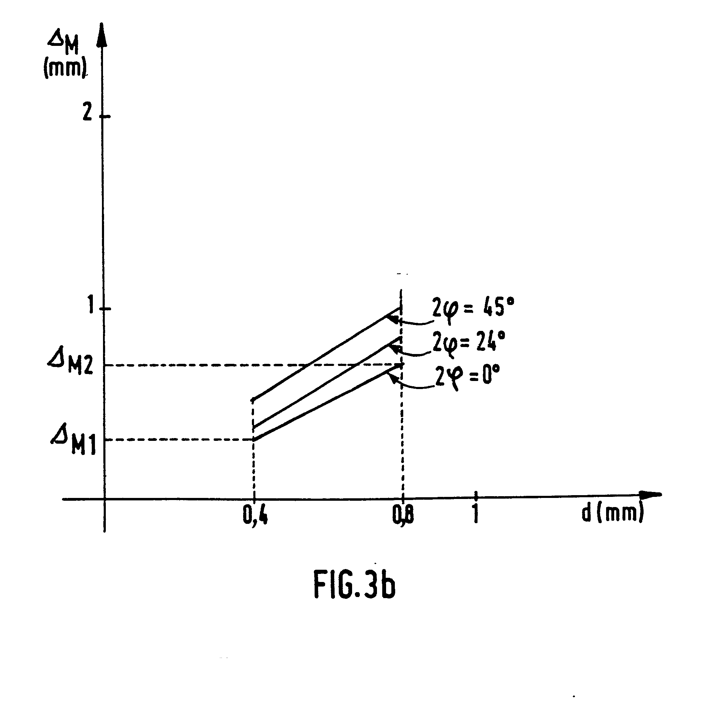

Les courbes présentées sur les figures 2, 3a et 3b prouvent que le but est atteint par le dispositif selon l'invention dans des conditions tout à fait contraire aux conditions préconisées par l'art antérieur puisque l'intensité des taches de diffraction étant quatre fois moins grande, le diamètre des taches est cependant au moins de moitié inférieur.

D'une façon générale pour obtenir des taches de diffraction de rayon $\Delta_M$ inférieur ou égal à 0,5 mm, le diamètre des diaphragmes et les dimensions apparentes de la source de rayons X doivent être au plus du même ordre de grandeur que ce rayon $\Delta_M$ souhaité, l'échantillon étant placé à une distance D du film aussi faible que possible.

La figure 3a montre la variation des dimensions du diamètre moyen $2\Delta_M$ des taches de diffraction, à mi-intensité, pour un angle de prélèvement

α = 3°, en fonction de la distance D entre le film et l'échantillon, l'angle de diffraction 2φ étant pris comme paramètre. Les courbes en trait pointillé correspondant à des diaphragmes d'ouverture d = 0,8 mm montrent que des taches de diamètre inférieur au mm ne peuvent jamais être réalisées.

Au contraire les courbes en trait plein correspondant à des diaphragmes d'ouverture d = 0,4 mm montrent qu'il est aisé d'obtenir des taches de dimensions convenables avec le dispositif selon l'invention, en plaçant l'échantillon à une distance D raisonnable du film, par exemple inférieure à 60 mm.

La figure 3b montre les variations des dimensions de rayon moyen $\Delta_M$ des taches de diffraction, à mi-intensité, pour un angle de prélèvement de α = 3° et une distance D = 30 mm, l'angle de diffraction 2φ étant pris comme paramètre, ces courbes étant réalisées pour le dispositif selon l'invention (d = 0,4 mm). Cette figure montre bien que ce rayon moyen $\Delta_M$ est de l'ordre de grandeur de l'ouverture d des diaphragmes lorsque la distance D de l'échantillon reste raisonnable.

Le dispositif selon l'invention permet d'obtenir, avec les conditions préconisées, des précisions de l'ordre de 0,1° sur l'orientation des cristaux, soit pratiquement dix fois mieux que l'art antérieur.

**Revendications**

1. Chambre pour réaliser un diagramme de diffraction dit de Laüe, incluant une source de rayons X concrétisée par son foyer et définie par ses dimensions focales et son angle de prélèvement, utilisée sous un angle de prélèvement tel que ses dimensions focales apparentes sont de même grandeur ⩽ 0,5 mm, un collimateur concrétisé par deux diaphragmes et placé sur le trajet des rayons issus de la source, et des moyens d'enregistrement du diagramme de Laüe obtenu à partir d'un échantillon monocristallin illuminé par le système optique ainsi constitué, caractérisé en ce que le diamètre des ouvertures des diaphragmes est sensiblement de même grandeur que les dimensions focales apparentes de la source et inférieur au rayon moyen d'une tache de diffraction à mi-intensité, en ce que les moyens d'enregistrement incluent un plan film disposé sur le trajet des faisceaux issu du collimateur, entre ce dernier et l'échantillon, cet échantillon étant placé à proximité de la face du film opposée à la source, et ce plan film recevant sur sa face tournée vers la source la trace directe du faisceau incident, et sur son autre face le diagramme formé des taches de diffraction caractéristiques de l'orientation des plans réticulaires de l'échantillon par rapport à l'axe optique du collimateur.

2. Chambre selon la revendication 1, dans laquelle la source de rayons X a pour dimensions focales 8 × 0,4 mm et est utilisée sous un angle de prélèvement de 3° de telle sorte que ses dimensions focales apparentes sont de 0,4 × 0,4 mm, caractérisé en ce que le diamètre de l'ouverture des diaphragmes est de l'ordre de 0,4 mm et en ce que l'échantillon monocristallin est placé à une distance du film inférieure à 100 mm.

3. Chambre selon la revendication 2, caractérisé en ce que les moyens d'enregistrement comprennent aussi un écran de transformation disposé entre le film et l'échantillon, écran muni d'une ouverture de diamètre supérieur à celui des diaphragmes centrée sur l'axe optique du collimateur.

**Patentansprüche**

1. Kammer zum Verwirklichen eines Laue-Beugungsdiagramms, mit einer Röntgenstrahlungsquelle, die durch ihr Brennpunkt gebildet und durch ihre Brennfleckgröße und ihren Ableitwinkel bestimmt wird, und unter einem Ableitwinkel derart verwendet wird, daß ihre scheinbare Brennfleckgröße dieselbe Größe ⩽ 0,5 mm hat, mit einem aus zwei Blenden bestehenden Kollimator im Strahlungsweg der von der Quelle ausgesandten Strahlung, und mit Aufzeichnungsmitteln für das Laue-Beugungsdiagramm, das von einer monokristallinen Probe abgeleitet wird, die durch das auf diese Weise aufgebaute optische System beleuchtet wird, dadurch gekennzeichnet, daß der Durchmesser der Blendenöffnungen im wesentlichen dieselbe Größe hat wie die scheinbare Brennfleckgröße der Quelle und kleiner ist als der mittlere Strahl eines Beugungsflecks mit halber Intensität, daß die Aufzeichnungsmittel einen im Strahlengang der vom Kollimator ausgesandten Bündel angeordneten flachen Film zwischen dem Kollimator und der Probe enthalten, wobei die Probe in der Nähe der von der Quelle abgewandten Fläche des Films angebracht ist, und dieser flache Film auf seiner der Quelle zugewandten Fläche die direkte Spur des auftreffenden Bündels und auf seiner anderen Fläche das durch Beugungsflecke gebildete Diagramm empfängt, und diese Beugungsflecke für die Orientierung der Netzebenen der Probe in bezug auf die optische Kollimatorachse charakteristisch sind.

2. Kammer nach Anspruch 1, worin die Röntgenstrahlungsquelle eine Brennfleckgröße von 8 × 0,4 mm besitzt und unter einem Ableitwinkel von 3° derart verwendet wird, daß ihre scheinbare Brennfleckgröße 0,4 × 0,4 mm beträgt, dadurch gekennzeichnet, daß der Durchmesser der Blendenöffnung zirka 0,4 mm beträgt, und daß die monokristalline Probe in einem Abstand vom Film angeordnet wird, der geringer als etwa 100 mm ist.

3. Kammer nach Anspruch 2, dadurch gekennzeichnet, daß die Aufzeichnungsmittel außerdem einen zwischen dem Film und der Probe angebrachten Umsetzungsschirm enthalten, der eine Öffnung mit einem Durchmesser besitzt, der größer als der der auf die optische Kollimatorachse zentrierten Blenden ist.

## Claims

1. A chamber for realizing a diffraction diagram which is referred to as a Laue diagram, comprising an X-ray source concretized by its focus and defined by its focal dimensions and its exposure angle, which source is used with an exposure angle such that its apparent focal dimensions are of the same magnitude, $\leq 0.5$ mm, a collimator concretized by two diaphragms and placed in the path of the rays emitted by the source, and means for recording the Laue diagram obtained from a monocrystalline sample illuminated by the optical system thus formed, characterized in that the diameter of the apertures of the diaphragms is substantially equal to the apparent focal dimensions of the source and smaller than mean radius of a diffraction spot at half-brightness, in that the recording means include a film plane which is disposed in the path of the beams from the collimator, between the latter and the sample, which sample is arranged in the vicinity of the face of the film which is remote from the source, the face of said film plane which faces the source receiving the direct trace of the incident beam, its other face receiving the diagram formed by the diffraction spots characterizing the orientation of the lattice planes of the sample with respect to the optical axis of the collimator.

2. A chamber as claimed in Claim 1, in which the focal dimensions of the X-ray source are $8 \times 0.4$ mm and the source is used with an exposure angle of 3° so that its apparent focal dimensions are $0.4 \times 0.4$ mm, characterized in that the diameter of the aperture of the diaphragms is in the order of 0.4 mm and in that the monocyrstalline sample is arranged at a distance of less than 100 mm from the films.

3. A chamber as claimed in Claim 2, characterized in that the recording means also comprise a transformation screen which is arranged between the film and the sample, which screen comprises an aperture whose diameter is larger than that of the diaphragms centered with respect to the optical axis of the collimator.

FIG.1a

FIG.1b

FIG.2

2

FIG.3a

FIG.3b